# EUROPEAN PATENT SPECIFICATION

(11) **EP 1 841 716 B1**
(45) Date of publication and mention of the grant of the patent: **04.03.2009**
(21) Application number: 05847319.0
(22) Date of filing: 01.11.2005
(51) Int. Cl.: C04B 41/71

(54) **FIBER CEMENT PRODUCTS**
FASERZEMENTPRODUKTE
PRODUITS DE FIBROCIMENT

(30) Priority: 02.11.2004 US 624256 P
(43) Date of publication of application: 10.10.2007
(73) Proprietor: Valspar Sourcing, Inc., Minneapolis, MN 55415 (US)
(72) Inventor: BRANDENBURGER, Larry, D., Lino Lakes, MN 55014 (US); VETTER, Glenn, O., New Hope, MN 55428 (US); O'DELL, William, G., Lawson, MO 64062 (US)
(74) Representative: Vossius & Partner
(86) International application number: PCT/US2005/039417
(87) International publication number: WO 2006/050338

(56) References cited:
- WO-A-01/30927
- WO-A-20/06000035
- DE-A1- 10 206 593
- US-A1- 2006 024 480
- DATABASE WPI Section Ch, Week 198005 Derwent Publications Ltd., London, GB; Class A93, AN 1980-08300C XP002371758 & JP 54 159442 A (DAINIPPON INK & CHEM KK) 17 December 1979 (1979-12-17)

## Description

This invention relates to powder coated fiber cement products.

A wide variety of products are available for finishing the exterior of buildings. These products include steel, brick, glass, rock, stucco, plastic or vinyl siding, aluminum siding, wood-resin composite materials including hardboard, pressboard, or masonite, and natural wood products.

Fiber cement products are a viable alternative to traditional products for the exterior finish of buildings. Conventional fiber cement products can be made, for example, by mixing cement, sand, cellulose fibers, additives, and water, which is then formed into the desired shape and dried. Examples of fiber cement products include siding, molded features, corners, cornices, vents, figures, rails, posts, and nearly any other exterior product that can be manufactured or shaped. Fiber cement products can be manufactured with a number of finishes, including a smooth finish, wood grain finish, and a rough sawn finish.

Other cement-based products may also be manufactured for a variety of uses and with a variety of finishes.

Cement-based and fiber cement products can be finished in the same manner as conventional products such as metal, natural wood, or wood products. For example, they can be finished using a latex-based paint. However, the painting process requires substantial time and effort and is frequently messy. Additionally, the paint must also be periodically re-applied after the initial coat has weathered.

Cement-based and fiber cement products may also be prepainted and prepared for use at a manufacturing facility. However, there are several difficulties with such an approach. Current paints require passing through large ovens to cure and dry the paints. These ovens are both costly to purchase and expensive to run. The large ovens also require a lot of space. Lastly, extra care must be taken with the products so they do not become scratched or damaged during packaging, shipping, and delivery.
WO 01/30 927 A discloses a method of applying a powder coating to a non-metallic substrate, which may be a cementitious product such as fibre cement board including the steps of impregnating the substrate or applying to the surface of the substrate a composition containing a polyester resin and then applying a powder coating composition to the substrate. Finally, the coated substrate is heated to an elevated temperature.
JP 54 159 442 A discloses the treatment of a concrete block consisting of applying a liquid primer, e.g. epoxy or acrylic resin, before a coating of a powdery material, e.g. acrylic acid, polyester, epoxy, polyethylene, polypropylene or nylon (polyamide) resin followed by baking.
DE 102 06 593 A discloses a coating system on cement based fibre boards. The coating system consists of a primer layer, an electrically conducting layer and a heat-cured protective powder coating.

There exists a need for fiber cement products that have high durability, require a low level of maintenance, are easy to prepare for installation and easy to install, yet still have an aesthetically pleasing appearance.

In one aspect, the present invention features a product including a fiber cement-substrate, a first coating comprising an acrylic latex, and a topcoat layer including a powder coating.

In another aspect, the present invention describes a method of producing a product, including providing a fiber a cement substrate, applying a first coating comprising an acrylic latex, and applying a topcoat layer, where the topcoat layer includes a powder coating.

The details of one or more embodiments of the invention are set forth in the description below. Other features, objects, and advantages of the invention will be apparent from the description and from the claims.

In one aspect, the invention features or fiber cement product with a coating that has high durability and can both be prepared for installation and installed easily. Additionally, the fiber cement product can be manufactured in a wide variety of colors, finishes, and textures. In many aspects, the fiber cement product also exhibits good weatherability. Fiber cement products may be used in both exterior and interior applications, typically for building and construction purposes. As the fiber cement product arrives in a finished state, there is no need for on-site painting as is required for unfinished products. Pre-finishing allows for an even, neat, consistent finish. Additionally, the finish is usually stronger and more durable than the paints which are typically applied on-site after installation.

The fiber cement product includes, but is not limited to, three layers: a fiber cement substrate, a first coating, and a topcoat layer. Optionally, other layers, such as an overcoat layer, may be applied. Fiber cement products typically include a mixture of cement, fibers, and water. Fibers may be added to fiber cement in a variety of forms including, but not limited to: wood fibers such as sawdust, wood pulp, and cellulose fibers; plastic fibers; or fiberglass fibers. Sand and/or gravel may be added to cement-based products in various amounts, combinations, and sizes. Other components may also be added, including, for example, sand, additives to speed the cement curing, additives to improve mixability, and additives to strengthen the finished substrate.

This mixture of cement and other additives and water is formed into the desired shape, and then cured and dried to form a cement-based or fiber cement substrate. The substrate may have a variety of textures, including a smooth texture, a wood grain texture, and a rough-sawn texture. Examples of fiber cement products include siding, sheets, planks, molded features, corners, cornices, vents, figures, rails, posts, and nearly any other building product that can be manufactured or shaped. Fiber cement substrates may be obtained from James Hardie Building Products, Inc., GAF Materials Corp., Certainteed Corp., Nichiha USA, Inc., and others. Other cement-based substrates may be obtained from a variety of cement and cement product manufacturers.

A first coating is applied to the cement-based or fiber cement substrate. The first coating is formed from an acrylic latex. The coating may be a layer that is on top of the substrate, may be a coating that partially penetrates the substrate and partially remains on top of the substrate, or may be a coating that penetrates completely into the substrate. In some aspects, the first coating may even be mixed into the substrate to pre-seal the substrate. Preferably, the first coating will at least partially penetrate the substrate. The first coating may be cured by various methods, including, but not limited to, thermal, UV, NIR, IR, or electron beam curing. Examples of suitable acrylic latexes include Latex Primer LKA0381 and Latex Primer LKA0530 (available from Valspar Products, Inc., Minneapolis, Minnesota).

Priming or sealing the substrate to create a first coating assists in creating a more durable finished product. It also assists in producing a better final appearance. Additionally, the finished product can frequently be made more cost effectively by using a primer or a sealer. These benefits may accrue for several reasons. One primary reason is that the first coating acts to seal and smooth the surface of the substrate. The term holdout may be used to describe the ability of the first coating to seal the surface of the substrate and prevent soaking in or wicking of the topcoat layer into the porosity of the substrate. A first coating having good holdout helps to reduce penetration of the substrate by the topcoat layer, and also helps enable a smoother, more consistent, and even finish. This also will often allow application of a smaller amount of the topcoat layer material to obtain a high quality finish. Therefore, preferably a first coating exhibiting good holdout should be used.

One measure of holdout is to measure the gloss of a coating applied onto the first coating and compare against the coating on a known sealed surface. This gloss comparison may be done using a gloss meter (available from BYK-Gardner, Columbia, Maryland). The reading from the sample using the test first coating is compared to the reading from the known sealed surface, and reported as a % achievable gloss. Thus, a first coating having full holdout will have a 100% achievable gloss. Preferably, the first coating will exhibit an achievable gloss of 80%, 90%, 95%, or more.

The acrylic latex primer or sealer used for the first coating may also be chosen to improve the adhesion of the three layers of substrate-first coating-topcoat layer. Better layer adhesion increases the moisture and weather resistance of the finished product. Additionally, the first coating itself should exhibit good adhesion. Adhesion may be tested according to ASTM D3359-02 "Standard Test Methods for Measuring Adhesion by Tape Test." A sample tested using the method will receive a score from 0A to 5A, with 5A being the best and 0A the worst. Preferably, the first coating will receive a score of at least 4A using this test method.

Along with improved adhesion, the first coating can also act as a barrier and help prevent chemical interactions between the substrate and the topcoat layer. One detrimental chemical interaction is saponification, which is alkaline catalyzed hydrolysis. For example, when the cement used is alkaline, and the topcoat layer is a polyester, saponification of the topcoat layer may occur. Other hydrolysis problems may also occur when the product is exposed to weather conditions. These problems are exacerbated when the topcoat layer directly contacts the substrate, as hydrolysis can lead to a breakdown of the coating. However, the proper primer or sealer can minimize or prevent hydrolysis. Therefore, the first coating will preferably be hydrolytically stable. This can be measured by contacting the first coating with a high pH surface (pH > 7.0) for an extended period of time while exposing the article to outdoor weather conditions. For example, fiber cement substrate may be coated with a first coating, and allowed to weather outdoors, after which the first coating may be tested for adhesion. Preferably, the first coating will exhibit no loss in adhesion after 6, 12, 18, or more months of outdoor exposure. The test method ASTM D3359-02 may be used for testing adhesion.

Another problem that may occur is efflorescence, which is the leeching of soluble salts to the surface of the product from the substrate. This appears as a white cloud, ghosting, or a white residue on the surface. This may be a particular problem when the product is exposed to harsh or extremely wet weather conditions. The first coating can also act to minimize or prevent efflorescence. Thus, preferably, the first coating will exhibit good efflorescence resistance.

Preferably, the first coating will provide blocking resistance, and more preferably, the first coating will be non-blocking. Non-blocking means that if articles having a first coating come into contact, the articles will not stick together or damage one another. This can be measured visually, as a non-blocking layer will not show any damage. Examples of damage include some of the layer peeling or picking off and sticking to another surface, such as another article with a first coating, after they have been in contact. As the articles with a first coating may be stacked, stored, or contacted with other articles before additional layers are added, blocking resistance is another desirable feature of the first coating. Additionally, when articles are produced, they may be staged within the production process. Staging occurs when one step of a process is completed, and materials are stored in an incomplete status awaiting later steps for completion. For example, a number of substrates may have a first coating applied, and then may be stored awaiting an order for the product, at which point the substrate with a first coating will continue in the production process, and have a topcoat layer applied. As staging is a common practice in many production facilities, non-blocking is a desirable attribute of the first coating.

Optionally, there may be one or more binder layers. After the first coating has been applied to the substrate, one or more optional binder layers may be applied. Suitably, primers and sealers may be used as a binder layer. As examples, a primer with excellent adhesion properties but poor holdout may be used as a binder layer, or a sealer may be used for the first coating and a primer for the binder layer.

A topcoat is applied to a fiber cement substrate having a first coating. The topcoat layer will be a powder coating. The powder coating topcoat may be applied directly onto the first coating, or it may be applied to a binder layer above the first coating. The topcoat layer may be applied almost immediately after the first coating dries, or there may be a substantial delay of days, weeks, or months prior to application of the topcoat layer. The topcoat layer may also be applied to a pre-primed or pre-sealed substrate. The powder coating topcoat layer may be the final and finishing layer of the fiber cement product, or it may be followed by additional layers. Suitable powder coatings for the topcoat layer include thermosetting or thermoplastic powder coatings. Examples of suitable powder coatings include polyester, acrylic, polyamide, and fluorocarbon based powder coatings. Typically, a powder coating topcoat layer will have a thickness from about 25 microns to about 75 microns, or from about 30 microns to about 60 microns.

A polyester based powder coating is typically formed primarily using terephthalic and isophthalic acids, neopentyl glycol, and may also include other components including various amounts of modifying glycols, polyols, or aliphatic acids. Standard durability polyester powder coatings are generally terephthalic acid based. For many external applications, a superdurable polyester powder coating is preferred. In general, a superdurable polyester powder coating refers to a polyester powder coating formed from a minimal amount of terephthalic acid. A superdurable polyester powder coating offers enhanced gloss and color retention compared to standard durability polyester powder coatings. While a standard durability polyester powder coating will typically begin to lose gloss after 18-24 months of exposure to Florida weather, a superdurable polyester powder coating will typically not begin to lose gloss until after 36-48 months of exposure to Florida weather. Generally, a superdurable polyester powder coating will be formed primarily from isophthalic acid (1,3-benzene dicarboxylic acid), 1,4-cyclohexane dicarboxylic acid ("CHDA"), adipic acid, hexahydrophthalic anhydride ("HHPA"), and combinations thereof. Additionally, other acids or additives may be added to improve some properties of the powder coating, such as enabling better flow characteristics, or improving leveling by lowering the glass transition temperature. However, if other acids or additives are present in too large a quantity, the powder coating will exhibit storage stability problems due to sintering. Therefore, preferably, a superdurable powder coating will be at least 50% based on isophthalic acid. More preferably, the superdurable powder coating will be 60%, 70%, 80%, 90%, or more based on diacids other than terephthalic acid. Preferably, a superdurable polyester powder coating will include less than 20% terephthalic acid, and more preferably less than 10%, 5%, 1%, or less than 0.5% terephthalic acid. Using a superdurable polyester powder coating yields a coating that provides better weatherability and greater resistance to environmental effects than standard durability polyester powder coatings. Furthermore, a finished cement-based or fiber cement product having a superdurable polyester powder coating will also have good chemical and stain resistance. Examples of suitable superdurable polyester powder coating resins include Crylcoat 630 and Crylcoat 2988 (both available from Surface Specialties, Inc.), SP6400 (Sun Polymer), and Crylcoat 690 (available from Surface Specialties, Inc.). Additionally, using a powder coating has beneficial environmental effects in that minimal solvents are utilized in the coating process, and minimal VOCs enter the atmosphere.

In a similar fashion, preferably, other powder coatings used, such as acrylic, polyamide, and fluorocarbon based powder coatings will also have good weather, chemical, and stain resistance. Examples of suitable acrylic based powder coating resins include: SCX-815, a carboxyl-functional acrylic resin (available from SC Johnson Polymer) which is cured with TGIC (Nissan Chemical); SCX-804, a hydroxyl-functional acrylic resin (available from SC Johnson Polymer) which is cured with B1530 blocked isocyanate (Degussa); and Fine Clad A-270, an epoxide-functional acrylic resin (available from Reichhold) which is cured with dodecanedioic acid. An example of a suitable thermosetting fluorocarbon powder coating resin is Lumiflon LF-710F, a hydroxyl-functional fluorocarbon resin (available from AGC Chemical) which is cured with B1530 blocked isocyanate (Degussa). An example of a suitable thermoplastic polyamide powder coating is Rilsan Fine (available from Atofina).

The topcoat layer may also provide enhanced blocking resistance, so that when the cement-based or fiber cement products are stacked, or otherwise come into contact for extended periods, the products will not stick together. Additionally, these articles may be staged in a production process awaiting shipment or additional processing, such as an overcoat.

Powder coatings may be prepared by usual methods, including extrusion and milling, non-aqueous dispersion, and spraying. Optionally, other components may be added to the powder coating. Examples of suitable additional components include colorants, curing agents, performance additives, and handling additives.

One optional component is a colorant. Colorants may be used to provide color, volume, and opacity to the powder coating. Suitable colorants include titanium dioxide (such as DuPont R-960), (Ultramarine Blue EP62 pigment (available from Ferro Corp.), Raven 450 Carbon Black and Raven 1255 Carbon Black (both available from Columbian Chemical), and Red Iron Oxide (Bayer).

Another optional component is a curing agent. A curing agent helps cure the powder coating, and are used according to the type of resin used and final properties desired. Examples of curing agents include Primid XL552 (available from EMS), TGIC (available from Nissan Chemical), B1540 (Degussa), Alcure 4147 (Eastman), Fine Clad A266 and Fine Clad A229-30 (Reichhold). Superdurable polyester powder coatings may be cured by a variety of curing agents depending upon the functionality present in the powder coating components. Suitable curing agents include epoxide functional curing agents (such as TGIC or epoxide functional acrylics) for superdurable polyester powder coatings having components with acidic functionality. Alternatively, caprolactam blocked isocyanates (such as B1530, available from Degussa), other blocked isocyanates, and uretdiones may be used for superdurable polyester powder coatings having components with hydroxyl functionality. Similarly, other powder coatings used, such as acrylic, polyamide, and fluorocarbon based powder coatings may also optionally include an appropriate curing agent.

Another optional component includes one or more performance additives. These optional additives may be used to improve the performance of the powder coating. For example, additives may be used to improve the application of the powder coating, the melting and/or curing of the coating, or the appearance or durability of the final coating. Suitable performance additives which may be useful include cure catalysts, antioxidants, color stabilizers, LTV absorbers, hindered amine light stabilizers, photo initiators, conductivity additives, tribocharging additives, anti-corrosion additives, fillers, degassing agents, inert pigments, texture agents, flow control agents, thixotropes, and edge coverage additives. Examples of suitable additives include Modaflow 3 (available from Surface Specialties Inc.), Blanc Fix Micro (available from Sachtleben), PL200 Acrylate flow agent (available from Estron Chemical), Matting Agent DT-3329 (available from Huntsman Chemical), Accelerant Crylcoat 166 (available from Surface Specialties Inc.), Minex 4 (available from Indusmin), Catalyst NXJ60 (available from Synthron), Tin catalyst Butaflow BT-71 (available from Estron Chemical), Oxy-melt A4 (available from Estron Chemical), and Benzoin (available from Estron Chemical).

Another optional component is a handling additive. A handling additive may be added to improve the handling or application process of the powder coating. These additives are usually added after the coating material has been formed, but before the powder has been ground. For example, the additive may be added after extrusion and before forming the powder. As handling additives are usually added after extrusion, they are frequently referred to as post-add additives. An example of a handling agent includes a dry-flow agent which helps the powder flow more freely, assists in flow through the grinder, and improves the consistency and ease of application. Examples of suitable dry-flow agents include aluminum oxide C (available from Degussa Corp), and silicas such as Cab-O-Sil M5 (available from Cabot).

Powder coatings may be applied to the desired article by various means including the use of fluid beds, spray applicators, or other application methods. Most commonly, an electrostatic spraying process is used, wherein the particles are electrostatically charged and sprayed onto an article that has been grounded so that the powder particles are attracted to and cling to the article.

After coating, the article may be heated. Heating causes the powder particles to melt and flow together to coat the article. Then, various methods may be used to cure the coating. For example, one method of curing is thermal curing, in which continued or additional heating is used to cure the coating. Additionally, powder coatings may also be cured in a wide variety of other ways, including heat, UV-, UV-Vis, narrow-range NIR ("NR-NIR"), Near IR- ("NIR"), IR-("IR"), and E-beam. Depending on the powder coating, the method of cure may be different. For example, a powder coating may be cured using an IR, NR, or NR-NIR oven. Preferably, a powder coating will be selected that is cured by NR-NIR. It may be generally understood that infrared ("IR") refers to that portion of the electromagnetic spectrum from about 1.2 µm to about 1.0 mm, while near infrared ("NIR"), or shortwave infrared, generally refers to that portion of the electromagnetic spectrum from about 1.2 µm to about 2.0 µm. Narrow range near infrared ("NR-NIR") generally refers to that portion of the electromagnetic spectrum from about 0.8 µm to about 1.5 µm. Thus, NR-NIR encompasses some of the range of the visible spectrum as well, which generally refers to the range from about 0.38 µm to about 1.2 µm.

There are benefits of using NR-NIR to cure the powder coating. All of the benefits of powder coatings, as discussed above, are present. Additionally, using NR-NIR is superior from a process perspective, as the time to heat and cure is less than that required for other powder coating curing methods. The NR-NIR is able to melt the powder coating quickly and efficiently because it uses a high intensity, narrow range of infrared radiation. With many other heating methods, the substrate acts as a heat sink because the heating is slower. Therefore, the entire substrate will often be heated before the powder coating melts and flows. This heated substrate also requires additional time to cool before it can be handled or packaged. However, using NR-NIR overcomes many of these disadvantages. When using NR-NIR, the temperature change on the surface is very rapid. This enables the powder coating to melt and cure before the entire substrate is significantly heated. In turn, this allows for a shorter cooling period before the material may be handled and packaged. This curing process will typically require less than 20 seconds, preferably less than 10 seconds, and more preferably less than 5 seconds of exposure to a portion of the article.

A NR-NIR oven may be used to heat, melt, and cure the powder coating. A suitable NIR oven is the Standard AdPhos NIR Test Oven (available from Advanced Photonics Technologies AG (AdPhos AG), Munich, Germany). The oven has a continuous flow conveyor, which is used to convey the substrate through the oven. The conveyor speed may be modified, so as to increase or decrease the time in which the substrate spends in the oven. Optionally, a blower may be used to create an air flow through the oven in the same or opposite direction as the direction of travel of the conveyor.

The near infrared radiation is produced by a radiation module within a NR-NIR oven. The number of emitters in a radiation module may vary. For example, the horizontal curing zone of the AdPhos NIR Test Oven utilizes a radiation module that uses up to 24 emitters. There may be three intensity settings for the radiation module - normal, high, and super. Different emitter bulbs are used to achieve the different intensities. Usually, changing intensities requires changing the bulbs in the unit. These intensities progress in the following fashion: super has twice the intensity of high, and high has twice the intensity of normal. Additionally, there is a power setting for the radiation module, with the setting range being 0% - 100%. This power setting can be used with bulbs of any intensity. Additionally, there may be a timer control, which can be used to control the emitters. For example, the timer can be used to turn the emitters off a certain length of time after turning on. The timer can be controlled in increments of less than a second. Alternatively, the line speed of the conveyor may be used to control the time that each portion of an article is exposed to the radiation.

Additionally, the distance between the emitters and conveyor in the oven may be adjusted. This enables the distance from the article to the emitters to be controlled, and thus allows further control over the radiation striking the coating. This distance may be adjusted to obtain better curing results. This distance may vary, for example, based on the color, the coating composition, and the exposure time. Typically, a distance from about 10 mm to about 250 mm between the emitters and the article will be used for fiber cement products.

Optionally, one or more overcoat layers may be applied after the topcoat layer. An overcoat layer may be a liquid or a powder coating. An overcoat layer may be colored, semi-transparent, clear, or other. Preferably, an overcoat will be clear, and will provide additional scratch and mar resistance. An overcoat layer may also provide additional environmental protection. Additionally, adding an overcoat layer may provide a different, altered, or enhanced finish or effect.

### Examples

### 1. Powder Coating A

A white, high-gloss, Primid cured polyester was prepared according to the formulation found in Table 1. The listed components, except for the post-add, were mixed, and extruded. Then, 1.5 parts by weight aluminum oxide C was added after extruding, and the combination ground into a powder.

**Table 1. Powder Coating A**

| **Component** | **A Parts by weight** |
|---|---|
| Polyester Resin (Crylcoat 440) | 950 |
| Curing Agent (Primid XL 552) | 50 |
| Colorant (DuPont R960) | 500 |
| Flow Agent (Modaflow 3) | 15 |
| Colorant (Ultramarine Blue) | 0.2 |
| Degassing agent (Benzoin) | 15 |
| Post-Add (Aluminum Oxide) | 1.5 |
| Color | White |
| Gloss | High |

### 2. Powder Coating B

A black, high-gloss, TGIC cured polyester was made according to the formulation as found on table 2, column B. The listed components, except for the post-add, were mixed, and extruded. After extruding, the aluminum oxide C was added and the combination ground into a powder.

### 3. Powder Coating C

A white, semi-gloss, TGIC cured polyester was made according to the formulation as found on table 2, column C. The listed components, except for the post-add, were mixed, and extruded. After extruding, the aluminum oxide C was added and the combination ground into a powder.

### 4. Powder Coating D

A black, semi-gloss, TGIC cured polyester was made according to the formulation as found on table 2, column D. The listed components, except for the post-add, were mixed, and extruded. After extruding, the aluminum oxide C was added and the combination ground into a powder.

**Table 2. Powder Coatings B, C, D**

| | **B** | **C** | **D** |
|---|---|---|---|
| **Component** | **Parts by weight** | **Parts by weight** | **Parts by weight** |
| Polyester Resin (Crylcoat 630) | 2866 | 1801 | 2309 |
| Cure Accelerant (Crylcoat 166) | | 27 | |
| Curing Agent (TGIC) | 216 | 138 | 174 |
| Matting Agent (DT-3329) | | 52.5 | 35 |
| Flow Agent (PL 200) | 35 | 35 | 35 |
| Catalyst (NXJ60) | 2 | | 1.5 |
| Additive (Oxy-Melt A4) | 21 | | |
| Colorant (DuPont R-960) | | 900 | |
| Matting Agent (Minex 4) | | 525 | 875 |
| Colorant (Raven 1255 Carbon Black) | 50 | | 50 |
| Colorant (Raven 450 Carbon Black) | | 0.3 | |
| Colorant (Ultramarine Blue) | | 3 | |
| Filler (Blanc Fix Micro) | 300 | | |
| Degassing agent (Benzoin) | 10 | 20 | 20 |
| Post-add (Aluminum Oxide) | 7 | 7 | 7 |
| Color | Black | White | Black |
| Gloss | High | Semi | Semi |

### 5. Powder Coating E

A white, semi-gloss, isocyanate cured acrylic powder coating was made according to the formulation as found on table 3. The listed components, except for the post-add, were mixed, and extruded. After extruding, the aluminum oxide C was added and the combination ground into a powder.

**Table 3. Powder Coating E**

| **Component** | **E Parts by weight** |
|---|---|
| Hydroxyl Acrylic Resin (SCX 804) | 1573 |
| Isocyanate Curing Agent (Alcure 4147) | 393 |
| Tin Catalyst (Estron Butaflow BT-71) | 20 |
| Flow Agent (Modaflow 3) | 35 |
| Degassing agent (Benzoin) | 20 |
| Colorant (DùPont R-960) | 900 |
| Colorant (Ravon 450 Carbon Black) | 0.3 |
| Matting Agent (Minex 4) | 525 |
| Post-Add (Aluminum Oxide) | 6.9 |
| Color | White |
| Gloss | Semi |

The powder coatings described above were used to make test samples. The test samples are reported in Tables 3A and 3B. The substrates used for the test samples, measuring about 15 cm by 20 cm, were made by cutting fiber cement siding (from James Hardie Building Products, Inc.). Substrates having both smooth and textured finishes were used.

Generally, a first coating was applied to the samples before the powder coating was applied. The first coating used for testing of all of the samples was Latex Primer LKA0381, a light grey primer (available from Valspar Corporation, Minneapolis, Minnesota). Over substrates having a first coating, the powder coating generally had a good, even film thickness. Over substrates without a first coating, the powder coating was generally spotty, exhibited poor flow, and demonstrated uneven thickness, with the coating being thicker near the center and thinner towards the edges.

Powder coatings were applied using an electrostatic application process. Powder coating was generally applied in order to create a film thickness of about 40 to about 50 microns (about 1.5 - 2 mils) for the final cured coating. Some samples had a different amount of powder coating applied to reach a different film thickness, and such cases are noted. In many cases, the substrate was passed through the oven, and then the powder coating was applied to the pre-heated substrate. The data for the pre-heat is included in the table, adjacent to the powder coating data for that sample.

Some samples were weighed at each stage of the process to better understand the impact of using narrow range NIR. The weighed samples have results noted as: before pre-treatment (m0), after coating (m1), and after curing using narrow range NIR (m).

Each finished sample was tested by visual appearance after exiting the oven and cooling. Samples were inspected for discoloration, charring, cracking, craters, blistering, specks, insufficient curing, unevenness, incomplete flow, etc. All samples passed visual inspection, except where noted in the tables. Visual inspection ensured that the coating on the samples appeared to melt and flow properly, that the substrate was fully covered, and appeared fully cured, but not over cured.

Representative samples were also tested for adhesion, according to ASTM D3359-02 "Standard Test Methods for Measuring Adhesion by Tape Test." A sample tested using the method will receive a score of 0A, 1A, 2A, 3A, 4A, or 5A, with a score of 5A for samples having the best adhesion and 0A for samples having the poorest adhesion. All samples that passed visual inspection also passed adhesion testing, scoring a 5A on the test, with no coating being pulled away.

Some samples were subjected to additional testing. A strong solvent, methyl ethyl ketone ("MEK"), was used to test the coating. A cotton swab was soaked with MEK and rubbed against the sample. Each back and forth motion was counted as double rub ("DR"). The number of rubs until the paint coating begins to wipe away was counted and noted. For example, 5 MEK DR denotes that the sample was rubbed back and forth with a MEK soaked swab 5 times before the paint coating began to wipe away. Only some samples were tested in order to obtain more information about the effectiveness of different parameter combinations.

The details of the samples can be found in the tables. The distance from the emitters to the sample article was 100 mm for all samples. The samples are described on the following tables, along with their associated method parameters. The column headings include information for each column as follows:
- No. - the number for that sample;
- Coating - the powder coating used for the topcoat layer (A, B, C, or D), or "pre-heat" if just pre-heating the substrate;
- Substrate - abbreviations used are: "Y" = substrate with a first coating, "N" = substrate without a first coating, "S" = smooth substrate, "T" = textured substrate;
- Emitters - number and intensity of bulbs used ("SI" = super intensity, "HI" = high intensity);
- Time (sec) - the time in seconds that the sample was exposed to the NIR radiation;
- Speed (mm/s) - the speed at which the sample passed through the NIR radiation zone of the NIR oven;
- Temp (°C) - the surface temperature of the sample, measured as the sample left the NIR oven (measurement taken using an infrared heat gun); and
- Comments - includes any other information, weight measurements, and unusual test results for that sample.

Samples exhibiting good results after curing and adhesion testing are subjected to further exposure evaluation. Suitable test methods for exposure testing include ASTM D6695-03b "Standard Practice for Xenon-Arc Exposures of Paint and Related Coatings" and ASTM D5722-03 "Standard Practice for Performing Accelerated Outdoor Weathering of Factory-Coated Embossed Hardboard Using Concentrated Natural Sunlight and a Soak-Freeze-Thaw Procedure." Testing services, such as Atlas Material Testing Technology (Chicago, Illinois) are able provide testing facilities and results tracking. The samples are periodically evaluated by visual inspection. The visual inspection examines the samples for cracking, peeling, chalking, adhesion loss, color change, pinholes, dirt, mildew, and other defects.

Additionally, some substrates were fully dried out before application of the powder coating. The samples were dried in an electric oven for 15 to 20 hours at a temperature of about 95°C. The samples generally lost between 10% to 12% of the sample weight due to drying out. It is expected that the dried out samples have a water content of about 0% to about 2%, and thus the normal samples have an expected water content of about 10% to about 14%. These samples are not included in the tables, because in testing dried out substrates, the powder coating adhered very poorly. There appeared to be insufficient moisture to retain a charge, thus making it more difficult for the electrostatically charged powder coating to adhere to the surface prior to melting and curing. This resulted in very poor coverage, and a coating that was uneven and spotty. Samples that were treated normally, and had a normal water content, did have enough moisture to retain a charge, and generally had good coverage.

**Table 3A. TEST SAMPLES**

| **No.** | **Coating** | **Substrate** | **Emitters** | **Time (sec)** | **Speed (mm/s)** | **Temp (°C)** | **Comments** |
|---|---|---|---|---|---|---|---|
| 1 | pre-heat | Y & S | 12xHI | 8 | 31 | 157 | |
| | C | Y & S | 12xHI | 3 | 83 | 165 | 45-60 µm thickness, 5 MEK DR |
| 2 | pre-heat | Y & S | 12xHI | 8 | 31 | 160 | |
| | C | Y & S | 12xHI | 4 | 63 | 185 | 8 MEK DR |
| 3 | pre-heat | Y & S | 12xHI | 8 | 31 | 145 | |
| | C | Y & S | 12xHI | 6 | 42 | 191 | 14 MEK DR |
| 4 | pre-heat | Y & S | 12xHI | 8 | 31 | 141 | |
| | C | Y & S | 12xHI | 8 | 31 | 217 | 30 MEK DR, surface yellowed |
| 5 | pre-heat | Y & S | 12xSI | 2 | 125 | 144 | |
| | C | Y & S | 12xSI | 2 | 125 | 201 | |
| 6 | pre-heat | Y & S | 12xSI | 2 | 125 | | g |
| | C | Y & S | 12xSI | 2 | 125 | 193 | m = 309.66 g |
| 7 | C | Y & S | 12xSI | 2 | 125 | 140 | |
| 8 | C | Y & S | 12xSI | 3 | 83 | 182 | |
| 9 | C | Y & S | 12xSI | 3.5 | 71 | 190 | |
| 10 | pre-heat | Y & T | 12xSI | 2 | 125 | 96 | |
| | C | Y & T | 12xSI | 2 | 125 | 191 | |
| 11* | pre-heat | N & T | 12xSI | 2 | 125 | | |
| | C | N & T | 12xSI | 2 | 125 | 138 | 41.7 µm thickness |
| 12* | pre-heat | N & T | 12xSI | 2 | 125 | 128 | |
| | C | N & T | 12xSI | 2 | 125 | 210 | 106 µm thickness |
| 13 | pre-heat | Y & T | 12xSI | 2 | 125 | 91 | |
| | D | Y & T | 12xSI | 0.5 | 500 | 171 | powder burned, 30% power |
| 14 | pre-heat | Y & T | 12xSI | 2 | 125 | 124 | m0 = 386.67 g |
| | D | Y & T | 12xSI | 2 | 125 | 96 | m = 387.44 g, 60% power |
| 15 | pre-heat | Y & T | 12xSI | 2 | 125 | 116 | |
| | D | Y & T | 12xSI | 2 | 125 | 201 | powder burned, 20% power |
| 16 | pre-heat | Y & T | 12xSI | 2 | 125 | 116 | |
| | D | Y & T | 12xSI | 3 | 83 | 71 | powder not melting, 20% power |
| 17 | pre-heat | Y & T | 12xSI | 2 | 125 | | |
| | D | Y & T | 12xSI | 5 | 50 | | powder not melting |
| 18 | pre-heat | Y & T | 12xSI | 2 | 128 | | |
| | D | Y&T | 12xSI | 0.25 | 1000 | 101 | not cured, no flow |
| 19 | D | Y & T | 12xSI | 0.5 | 500 | 92 | no flow |
| 20 | D | Y & T | 12xSI | 0.6 | 417 | 103 | poor flow |
| 21 | D | Y & T | 12xSI | 0.7 | 357 | 130 | powder burned |
| 22 | D | Y & S | l2xSI | 0.7 | 357 | 152 | powder burned |
| 23 | D | Y & S | 12xSI | 0.7 | 357 | 175 | powder burned |

| | | | | | | | |
|---|---|---|---|---|---|---|---|
| * = no first coating ; outside of the invention. | | | | | | | |

**Table 3B. TEST SAMPLES**

| **No.** | **Coating** | **Substrate** | **Emitters** | **Time (sec)** | **Speed (mm/s)** | **Temp (°C)** | **Comments** |
|---|---|---|---|---|---|---|---|
| 24 | B | Y & S | 12xSI | 0.7 | 357 | 122 | |
| 25 | pre-heat | Y & T | 12xSI | 2 | 125 | 112 | |
| | B | Y & T | 12xSI | 0.5 | 500 | 137 | |
| 26 | pre-heat | Y & T | 12xSI | 2 | 125 | | |
| | B | Y & T | 12xSI | 0.5 | 500 | 213 | more powder than no. 25 |
| 27 | pre-heat | Y & T | 12xSI | 2 | 125 | | |
| | C | Y & T | 12xSI | 2 | 125 | 207 | 2.0 g coating |
| 28 | pre-heat | Y & S | 12xSI | 2 | 125 | 155 | |
| | C | Y & S | 12xSI | 2 | 125 | 191 | 1.75 g coating |
| 29 | pre-heat | Y & T | 12xSI | 2 | 125 | 155 | |
| | C | Y & T | 12xSI | 2 | 125 | 186 | 5.0 g coating |
| 30 | pre-heat | Y & S | 12xSI | 2 | 125 | 152 | |
| | C | Y & S | 12xSI | 2 | 125 | 205 | 2.88 g coating |
| 31 | pre-heat | Y & T | 12xSI | 2 | 125 | 163 | |
| | C | Y & T | 12xSI | 3 | 83 | 185 | 1.75 g coating, burned |
| 32 | pre-heat | Y & S | 12xSI | 2 | 125 | 146 | |
| | A | Y & S | 12xSI | 2 | 125 | | blistering on coating surface |
| 33 | pre-heat | Y & S | 12xSI | 2 | 125 | | |
| | A | Y & S | 12xSI | 2 | 125 | 180 | almost blistering |
| 34 | pre-heat | Y & S | 12xSI | 2 | 125 | | |
| | A | Y & S | 12xSI | 2 | 125 | 167 | almost blistering, 3 MEK DR |
| 35 | A | Y & S | 12xSI | 4 | 63 | 114 | 50% power |
| 36 | A | Y & S | 12xHI | 4 | 63 | 101 | |
| 37 | A | Y&S | 12xHI | 5 | 50 | 115 | |
| 38 | pre-heat | Y & S | 12xHI | 5 | 50 | 139 | |
| | A | Y & S | 12xHI | 5 | 50 | 156 | |
| 39 | pre-heat. | Y & S | 12xHI | 8 | 31 | 143 | |
| | A | Y & S | 12xHI | 6 | 42 | 168 | DR |
| 40 | pre-heat | Y & T | 12xHI | 8 | 31 | 149 | |
| | A | Y&T | 12xHI | 6 | 42 | 171 | |

## Claims

1. A product, comprising:
a fiber cement substrate;
a first coating comprising an acrylic latex;
a topcoat layer on the first coating, wherein the topcoat layer comprises a powder coating.

2. The product of claim 1, wherein the powder coating comprises a thermosetting powder coating, a thermoplastic powder coating, a polyester powder coating, a polyamide powder coating, a fluorocarbon powder coating, or an acrylic powder coating.

3. The product of claim 2, wherein the polyester powder coating is a superdurable polyester powder coating.

4. The product of claims 1-3, wherein the first coating is a water-based latex acrylic primer or a UV cured or electron beam cured coating.

5. The product of claims 1-4, further comprising an overcoat layer.

6. The product of claims 1-5, further comprising a binder layer.

7. The product of claims 1-6, wherein the topcoat layer has a thickness from about 25 µm to about 75 µm.

8. A method of producing a product, comprising:
providing a fiber cement substrate;
applying a first coating, wherein the first coating comprises an acrylic latex primer; and
applying a topcoat layer on the first coating, wherein the topcoat layer comprise a powder coating.

9. The method of claim 8, wherein applying a topcoat layer comprises melting and curing the powder coating using narrow range NIR with a wavelength range from about 0.8 µm to about 1.5 µm.

10. The method of claims 8-9, wherein the melting and curing requires less than 20 seconds.

11. The method of claims 8-10, wherein the first coating comprises a water-based styrene latex acrylic primer, or a UV cured or electron beam cured coating, and the top coat layer comprises a polyester powder coating a superdurable polyester powder coating, a thermoplastic powder coating, or a thermosetting powder coating.

12. The method of claims 8-11, further comprising applying an overcoat layer.

13. The method of claims 8-13, further comprising applying a binder layer.

## Patentansprüche

1. Produkt, umfassend:
ein Faserzementsubstrat;
eine erste Beschichtung, umfassend ein Acryllatex;
eine Deckschicht auf der ersten Beschichtung, wobei die Deckschicht eine Pulverbeschichtung umfasst.

2. Produkt gemäß Anspruch 1, wobei die Pulverbeschichtung eine Duroplastpulverbeschichtung, eine thermoplastische Pulverbeschichtung, eine Polyesterpulverbeschichtung, eine Polyamidpulverbeschichtung, eine Fluorkohlenstoffpulverbeschichtung oder eine Acrylpulverbeschichtung umfasst.

3. Produkt gemäß Anspruch 2, wobei die Polyesterpulverbeschichtung eine extra haltbare Polyesterpulverbeschichtung ist.

4. Produkt gemäß den Ansprüchen 1 bis 3, wobei die erste Beschichtung eine Latexacrylgrundierung auf Wasserbasis oder eine UV-gehärtete oder elektronenstrahlgehärtete Beschichtung ist.

5. Produkt gemäß den Ansprüchen 1 bis 4, des Weiteren umfassend eine Overcoating-Schicht.

6. Produkt gemäß den Ansprüchen 1 bis 5, des Weiteren umfassend eine Bindemittelschicht.

7. Produkt gemäß den Ansprüchen 1 bis 6, wobei die Deckschicht eine Dicke von etwa 25 µm bis etwa 75 µm besitzt.

8. Verfahren zur Herstellung eines Produkts, umfassend:
Bereitstellen eines Faserzementsubstrats;
Aufbringen einer ersten Beschichtung, wobei die erste Beschichtung eine Acryllatexgrundierung umfasst; und
Aufbringen einer Deckschicht auf der ersten Beschichtung, wobei die Deckschicht eine Pulverbeschichtung umfasst.

9. Verfahren gemäß Anspruch 8, wobei das Aufbringen einer Deckschicht das Schmelzen und Härten der Pulverschicht unter Verwendung von engbandigem Nahinfrarot mit einem Wellenlängenbereich von etwa 0,8 µm bis etwa 1,5 µm umfasst.

10. Verfahren gemäß den Ansprüchen 8 bis 9, wobei das Schmelzen und Härten weniger als 20 Sekunden benötigt.

11. Verfahren gemäß den Ansprüchen 8 bis 10, wobei die erste Beschichtung eine Styrollatexacrylgrundierung auf Wasserbasis oder eine UV-gehärtete oder elektronenstrahlgehärtete Beschichtung umfasst und wobei die Deckschicht eine Polyesterpulverbeschichtung, eine extra haltbare Polyesterpulverbeschichtung, eine thermoplastische Pulverbeschichtung oder eine Duroplastpulverbeschichtung umfasst.

12. Verfahren gemäß den Ansprüchen 8 bis 11, des Weiteren umfassend das Auftragen einer Overcoating-Schicht.

13. Verfahren gemäß den Ansprüchen 8 bis 13, des Weiteren umfassend das Auftragen einer Bindemittelschicht.

## Revendications

1. Produit, comprenant :
■ un substrat en fibrociment ;
■ un premier revêtement comprenant un latex acrylique ;
■ une couche de revêtement superficiel sur le premier revêtement, dans lequel la couche de revêtement superficiel comprend un revêtement en poudre.

2. Produit selon la revendication 1, dans lequel le revêtement en poudre comprend un revêtement en poudre thermodurcissable, un revêtement en poudre thermoplastique, un revêtement en poudre de polyester, un revêtement en poudre de polyamide, un revêtement en poudre de fluorocarbone, ou un revêtement en poudre acrylique.

3. Produit selon la revendication 2, dans lequel le revêtement en poudre de polyester est un revêtement en poudre de polyester super-durable.

4. Produit selon les revendications 1 à 3, dans lequel le premier revêtement est une couche primaire de latex acrylique à base d'eau ou un revêtement durci aux UV ou par faisceau d'électrons.

5. Produit selon les revendications 1 à 4, comprenant en outre une couche de finition.

6. Produit selon les revendications 1 à 5, comprenant en outre une couche de liant.

7. Produit selon les revendications 1 à 6, dans lequel la couche de revêtement superficiel a une épaisseur d'environ 25 µm à environ 75 µm.

8. Procédé de production d'un produit, comprenant :
■ la fourniture d'un substrat en fibrociment ;
■ l'application d'un premier revêtement, dans lequel le premier revêtement comprend une couche primaire de latex acrylique; et
■ l'application d'une couche de revêtement superficiel sur le premier revêtement, dans lequel la couche de revêtement superficiel comprend un revêtement en poudre.

9. Procédé selon la revendication 8, dans lequel l'application d'une couche de revêtement superficiel comprend la fusion et le durcissement du revêtement en poudre en utilisant une plage étroite NIR avec une plage de longueur d'onde à partir d'environ 0,8 µm à environ 1,5 µm.

10. Procédé selon les revendications 8 à 9, dans lequel la fusion et le durcissement nécessitent moins de 20 secondes.

11. Procédé selon les revendications 8 à 10, dans lequel le premier revêtement comprend une couche primaire de latex styrène acrylique à base d'eau, ou un revêtement durci par UV ou par faisceau d'électrons, et la couche de revêtement superficiel comprend un revêtement en poudre de polyester, un revêtement en poudre de polyester super-durable, un revêtement en poudre thermoplastique, ou un revêtement en poudre thermodurcissable.

12. Procédé selon les revendications 8 à 11, comprenant en outre l'application d'une couche de finition.

13. Procédé selon les revendications 8 à 13, comprenant en outre l'application d'une couche de liant.
